# EUROPÄISCHE PATENTSCHRIFT

(11) **EP 1 943 142 B1**
(45) Veröffentlichungstag und Bekanntmachung des Hinweises auf die Patenterteilung: **10.02.2010**
(21) Anmeldenummer: 05770720.0
(22) Anmeldetag: 30.06.2005
(51) Int. Cl.: B64B 1/60, B64B 1/62

(54) **UNBEMANNTES LUFTFAHRZEUG ALS PLATTFORM FÜR TELEKOMMUNIKATIVE ODER FÜR ANDERE WISSENSCHAFTLICHE ZWECKE**
UNMANNED AIRCRAFT AS A PLATFORM FOR TELECOMMUNICATION OR OTHER SCIENTIFIC PURPOSES
AERONEF NON HABITE EN TANT QUE PLATE-FORME UTILISEE A DES FINS DE TELECOMMUNICATION OU A D'AUTRES FINS SCIENTIFIQUES

(43) Veröffentlichungstag der Anmeldung: 16.07.2008
(73) Patentinhaber: Alavi, Kamal, 6318 Walchwil (CH)
(72) Erfinder: Alavi, Kamal, 6318 Walchwil (CH)
(74) Vertreter: Luchs, Willi
(86) Internationale Anmeldenummer: PCT/EP2005/007074
(87) Internationale Veröffentlichungsnummer: WO 2007/003206

(56) Entgegenhaltungen:
- US-A- 4 773 617
- US-A- 5 104 059
- US-A- 5 348 254
- US-A1- 2003 040 273
- US-B1- 6 305 641

## Beschreibung

Die Erfindung betrifft ein unbemanntes Luftfahrzeug als Plattform für telekommunikative oder für andere wissenschaftliche Zwecke in einer vorbestimmten Höhe in der Stratosphäre gemäss dem Oberbegriff des Anspruches 1. Ein solches Luftfahrzeug ist aus US-A-2003/0040273 bekannt.

Die Verwendung von mit Gas gefüllten Hochdruckballonen zum Stationieren von diversen Telekommunikations- und/oder Überwachungsplattformen in der Stratosphäre ist beispielsweise aus der US 5,104,059 bekannt. Im Gegensatz zu sogenannten Niederdruckballonen können diese über längere Zeit in der Stratosphäre verbleiben. Eine besondere Problematik derartiger Hochdruckballone ergibt sich aus den extremen Temperaturunterschieden, denen sie tagsüber einerseits und in der Nacht andererseits ausgesetzt sind. Am Tag ist die Ballonoberfläche der direkten Sonnenstrahlung ausgesetzt, und das Gas im Balloninnern wird von der Sonnenstrahlung erwärmt, wodurch der Gasdruck steigt. In der Nacht hingegen sinkt die Umgebungs- und Gastemperatur und dadurch auch der Gasdruck im Hochdruckballon. Dies stellt noch zusätzliche Anforderungen an das Material und die Konstruktion des unter hohem Druck stehenden Hochdruckballons. Es erschwert ausserdem das Aufrechterhalten der Höhe und Plattformposition gegenüber der Erde.

Der vorliegenden Erfindung liegt die Aufgabe zugrunde, ein unbemanntes Luftfahrzeug der eingangs genannten Art zu schaffen, bei dem der die Plattform tragenden, mit Gas gefüllten Hochdruckballon in optimaler Weise in der gewünschten Höhe und Position gehalten werden kann, und er überdies über eine lange Lebensdauer verfügt.

Diese Aufgabe wird erfindungsgemäss durch ein Luftfahrzeug mit den Merkmalen des Anspruches 1 gelöst.

Weitere bevorzugte Ausgestaltungen des erfindungsgemässen Luftfahrzeuges bilden den Gegenstand der abhängigen Ansprüche.

Beim erfindungsgemässen Luftfahrzeug, bei dem der Hochdruckballon innerhalb eines in der Stratosphäre in eine aerodynamische Aussenform aufbläsbaren Aussenballons angeordnet ist, der mindestens eine mit einem Medium füllbare Nieder- oder Hochdruck-Isolationskammer um den Hochdruckballon bildet, wobei Heiz- und Kühlmittel für das in der Isolationskammer zirkulierende Medium vorgesehen sind, werden die negativen Auswirkungen der extremen Temperaturunterschiede auf den Gasdruck im Hochdruckballon weitgehend vermieden, so dass dieser aus einem leichteren und billigeren Material hergestellt werden kann, und seine Lebensdauer nachhaltig erhöht wird, dies auch aufgrund der Montage der Propeller an der Plattform und nicht am Ballon.

Die Plattformposition gegenüber der Erde kann dank dem weitgehend konstanten Gasdruck im Hochdruckballon und den ausserhalb des Aussenballons befindlichen, elektrisch antreibbaren Propellern möglichst unverändert über längere Zeit aufrechterhalten bleiben.

Das erfindungsgemässe Luftfahrzeug kann dadurch, dass der Aussenballon erst in der Stratosphäre oder am Boden aufgeblasen wird und seine aerodynamische Form erhält, problemlos durch die Troposphäre auf die gewünschte Höhe von 20 bis 30 km aufsteigen, wenn Luft verwendet wird - im Gegensatz zu den an sich bekannten, zeppelinartigen Luftfahrzeugen mit metallenem Gerüst, bei denen gerade in dieser Aufstiegphase etliche Schwierigkeiten überwunden werden müssen, was nachfolgend noch im Detail erläutert ist.

Die Erfindung wird nachfolgend anhand der Zeichnung näher erläutert. Es zeigen rein schematisch:
- Fig. 1: ein Ausführungsbeispiel eines erfindungsgemässen Luftfahrzeu- ges in schematischer Seitenansicht;
- Fig. 2A: einen Teil des Luftfahrzeuges nach Fig. 1 im Querschnitt, mit einem Schaltschema einer Heiz- und einer Kühleinheit; wobei Luft in der äusseren Isolationskammer verwendet wird;
- Fig. 2B: einen Teil des Luftfahrzeuges nach Fig. 1 im Querschnitt, mit einem Schaltschema einer Heiz- und einer Kühleinheit, wobei Helium in der äusseren Isolationskammer verwendet wird;
- Fig. 3: eine der Fig. 2 entsprechende Darstellung eines weiteren Aus- führungsbeispiels des erfindungsgemässen Luftfahrzeuges;
- Fig. 4: eine schematische Ansicht von oben auf die Plattform des Luft- fahrzeuges;
- Fig. 5: eine schematische Ansicht des erfindungsgemässen Luftfahrzeu- ges beim Aufstieg in die Stratosphäre; und
- Fig. 6: die Plattform von hinten veranschaulicht beim Zurückfliegen auf die Erde.

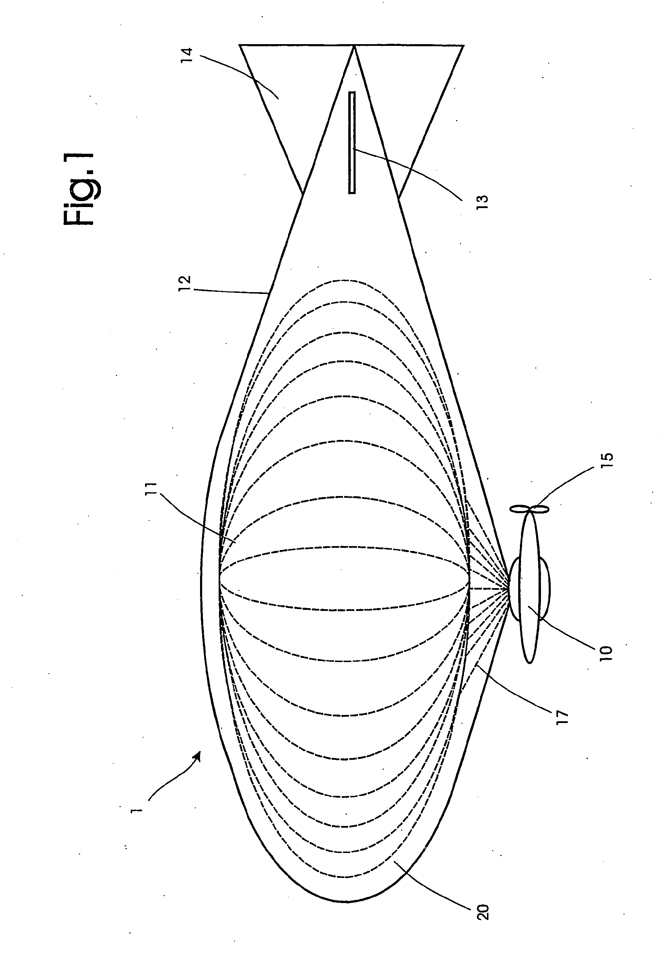

Fig.1 zeigt schematisch ein unbemanntes Luftfahrzeug 1 insbesondere zur drahtlosen Kommunikation und/oder zu anderen wissenschaftlichen Zwecken vorgesehenen Plattform 10, einer sogenannten "high altitude platform", in der Stratosphäre. Dieses Luftfahrzeug 1 kann hierbei derart gesteuert sein, dass es zur Erde eine stationäre Position einnimmt oder es kann auch relativ zur Erde beweglich angeordnet sein, wenn es beispielsweise stationär zu einem im Weltall befindlichen Satelliten fliegend positioniert sein soll. Dieses Luftfahrzeug eignet sich nicht nur als Übermittlungsstation für die Telekommunikation sondern auch für wissenschaftliche Messzwecke, Übermittlungsstation für TV- oder Radiostationen, für photografische Zwecke, als Wetterstation und vieles mehr. Es ist mit einem GPS und anderen Kontrollgeräten ausgerüstet, so dass eine automatische Boardsteuerung des Luftfahrzeuges ermöglicht wird, wobei das Luftfahrzeug von einem Kontrollzentrum auf der Erde quasi ferngesteuert eine elektronische Verbindung besteht.

Gemäss Fig. 1 befindet sich das Luftfahrzeug 1 bereits auf der gewünschten Höhe von 20 bis 30 km, die vorteilhaft bezüglich der Windverhältnisse ist. Die mit entsprechenden Geräten ("Payload plane") ausgerüstete Plattform 10 wird von einem mit Gas, vorzugsweise Helium, gefüllten Hochdruckballon 11 getragen. Als Variante ist denkbar, dass diese Plattform 10 mittels sich um den Ballon 11 erstreckende Tragelemente 17, wie zum Beispiel Bänder oder ähnlichem, getragen ist.

Der zweckmässigerweise eine Kürbisform oder andersförmig aufweisende Hochdruckballon 11 ("Pumpkin Balloon") befindet sich innerhalb eines eine aerodynamische Aussenform aufweisenden Aussenballons 12, der erst, nachdem die Plattform 10 mittels des Hochdruckballons 11 auf die gewünschte Höhe insbesondere von 20.7 km problemlos durch die Troposphäre gebracht wurde, mit einem Medium gefüllt und in die aerodynamische Aussenform aufgeblasen wird.

Der Aussenballon 12 ist an einem hinteren Ende mit einem Höhen- und Seitenleitwerk 13, 14 ausgerüstet. Es sind ausserdem Mittel zum Aufrechterhalten der Luftfahrzeug- bzw. der Plattformposition gegenüber der sich drehenden Erde vorhanden. Diese umfassen sich ausserhalb der Plattform 10 befindliche, elektrisch antreibbare Propeller 15 für die Luftfahrzeug-Fortbewegung oder aber auch für die Luftfahrzeug-Stabilisierung. Hierbei sind die Propeller 15 mit individuellen Drehzahlen ansteuerbar, um das Luftfahrzeug stets in derselben Richtung zur Erdoberfläche zu halten. Die Propeller 15 können auch schwenkbar an der Plattform 10 angeordnet und somit zu beiden vorstehend erwähnten Zwecken dienen. Das erfindungsgemässe Luftfahrzeug 1 ist zudem mit einer Steuerung und mit einem elektronischen Autopilot-System ausgestattet.

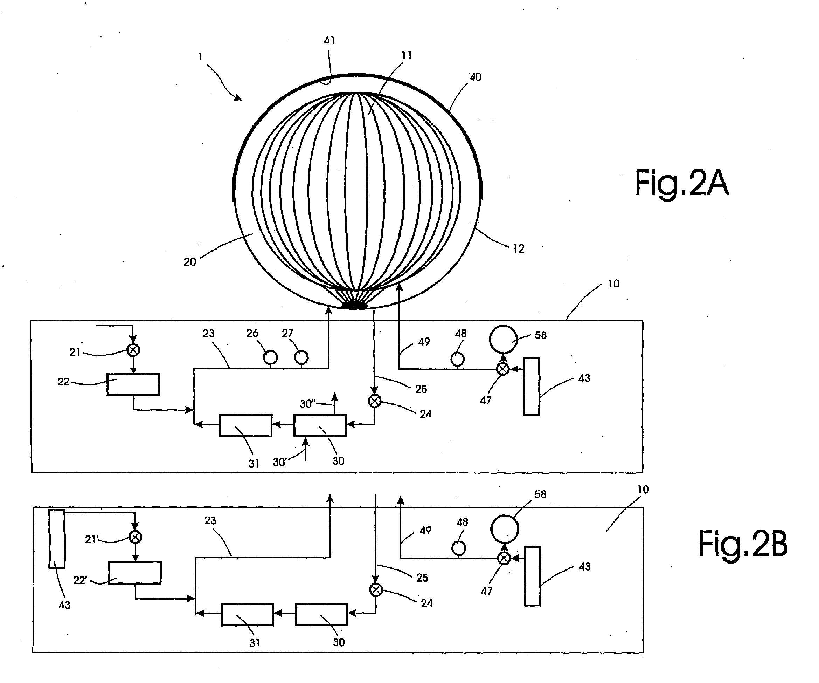

Bei der in Fig. 1 und 2A schematisch dargestellten Luftfahrzeug-Variante wird als Medium zum Füllen und Aufblasen des Aussenballons die Aussenluft verwendet. Um den Hochdruckballon 11 herum wird eine mit der Aussenluft gefüllte Nieder- oder Hochdruck-Isolationskammer 20 gebildet, in welche die Aussenluft gepumpt und in Zirkulation gebracht wird, wobei erfindungsgemäss Mittel vorgesehen sind, mit welchen die in der Isolationskammer 20 zirkulierende Luft aufgewärmt oder durch einen Wärmeaustausch abgekühlt werden kann, damit der Hochdruckballon 11 von den sich beispielsweise während der Nacht und am Tag ergebenden Temperaturunterschieden sozusagen abgeschirmt wird und sein Gasdruck so wenig wie möglich ändert. Anstelle von Luft könnte als Medium auch Helium oder ein anderes Gas oder sogar eine schaumartige Masse mit einem hohen Isolationswert, wie beispielsweise Styropor, verwendet werden.

Die Aussenluft wird gemäss Fig. 2A mittels einer Pumpe 21 in einen Kompensations-Tank 22 gepumpt und von dort über eine Zufuhrleitung 23 in die Isolationskammer 20 geliefert, wobei eine weitere Pumpe 24 für die Luftzirkulation sorgt. Die durch die Pumpe 24 über eine Abzugsleitung 25 aus der Isolationskammer 20 abgezogene Luft gelangt über eine ausserhalb des Aussenballons 12 angeordnete Kühleinheit 30 und eine ebenfalls ausserhalb des Aussenballons 12 angeordnete Heizeinheit 31 wieder in die Zufuhrleitung 23 und über diese wieder in die Isolationskammer 20. Die Kühleinheit 30 und die Heizeinheit 31 kommen dabei wahlweise zum Einsatz.

Die sich am Tag durch die auf den Aussenballon 12 einwirkende Sonnenstrahlung in der Isolationskammer 20 erwärmende Luft wird in der Kühleinheit 30 abgekühlt, die sich während der Nacht in der Isolationskammer 20 abkühlende Luft wird hingegen in der Heizeinheit 31 erwärmt. Dieser Prozess wird derart gesteuert, dass die Temperaturschwankungen der in der Isolationskammer 20 zirkulierenden Luft möglichst klein gehalten werden. Zu diesem Zweck ist eine Druck- 26 und Temperaturmessung 27 vorgesehen, welche mit einer nicht näher gezeigten Steuereinheit zwecks automatischer Regulierung verbunden sind.

Bei der Kühleinheit 22 handelt es sich um einen Wärmeaustauscher, bei dem die tiefe Temperatur (-40°C oder tiefer) der Aussenluft als Kühlmedium ausgenutzt wird. Dementsprechend wird kalte Luft durch eine Ansaugleitung 30' als Kühlmedium verwendet, welche entsprechend wieder via eine Leitung 30" ausgestossen wird.

Die Heizeinheit 21 wird elektrisch betrieben. Zur Erzeugung des elektrischen Stroms wird die Solarenergie genutzt, wozu der Aussenballon 12, dessen Grundmaterial Polyethylen ist, an seiner Oberfläche mit einem Solarkollektorfilm 40 versehen ist. Die während des Tages durch Sonneneinstrahlung produzierte elektrische Energie wird mittels Batterien gespeichert.

Der Aussenballon 12 wird erfindungsgeinäss auch mit einem Infrarotkollektorfilm 41 versehen, mit welchem die Infrarotabstrahlung von der Erde während der Nacht ausgenützt wird. Der Infrarotkollektorfilm 41 an der Innenseite des Solarkollektorfilms 40 ist vorzugsweise als ein dunkler, etwa 12 µm dicker Aluminiumfilm, einer Farbschicht oder ähnlichem ausgebildet. Sowohl der Aussenballon 12, als auch der mit einem Helium-Speicher 43 verbundene Hochdruckballon 11 werden mit Vorteil aus einem durchsichtigen Kunststoffmaterial hergestellt, wobei dann der Infrarotkollektorfilm 41 auf der der Erde zugewandten Innenseite des Aussenballons 12 angebracht wird. Die Infrarotstrahlung kann dann von unten durch die beiden Ballons hindurch durchdringen und hilft so die ansonsten während der Nacht stattfindende Abkühlung temperaturmässig auszugleichen.

Sowohl aussenseitig als auch innenseitig ist der Solarkollektorfilm als auch der Infrarotkollektorfilm durch eine Kunststoff-Schaumschicht, zum Beispiel Polystyrol, abgedeckt, so dass nicht eine übermässige Erhitzung der Ballonoberfläche entsteht.

Der Helium-Speicher 43 ist über eine Leitung 49 mit dem Innern des Hochdruckballons 11 verbunden. Eine Pumpe 47 ermöglicht eine Zuführung des Heliums entweder in diesen Hochdruckballon 11 oder in einen zusätzlichen mit Helium gefüllten Ballon 58, wobei dieser Ballon 58 in der Plattform 10 oder aussen enthalten ist und als Ausgleichskammer für eine Höhenregulierung des gesamten Luftfahrzeuges dient. Eine an die Steuereinheit lieferbare Druckmessung 48 in der Leitung 49 ist ebenfalls vorgesehen.

Der bereits erwähnte Kompensations-Tank 22 für die Aussenluft sorgt für konstanten Druck und konstantes Volumen in der Nieder- oder Hochdruck-Isolationskammer 20 und somit auch für das Aufrechterhalten der aerodynamischen Aussenform des Aussenballons 12.

Bei dem Schaltschema gemäss Fig. 2B wird als Unterschied zu demjenigen nach Fig. 2A nicht Luft sondern Helium als Isolationsgas verwendet. Es wird daher Helium von einem Vorratsbehälter 22' in die Isolationskammer 20 geführt. Ansonsten sind die gleichen Aggregate wie in Fig. 2A vorgesehen, welchen dieselben Bezugszeichen zugeordnet sind. Es wird daher nicht noch einmal im Einzelnen darauf eingegangen.

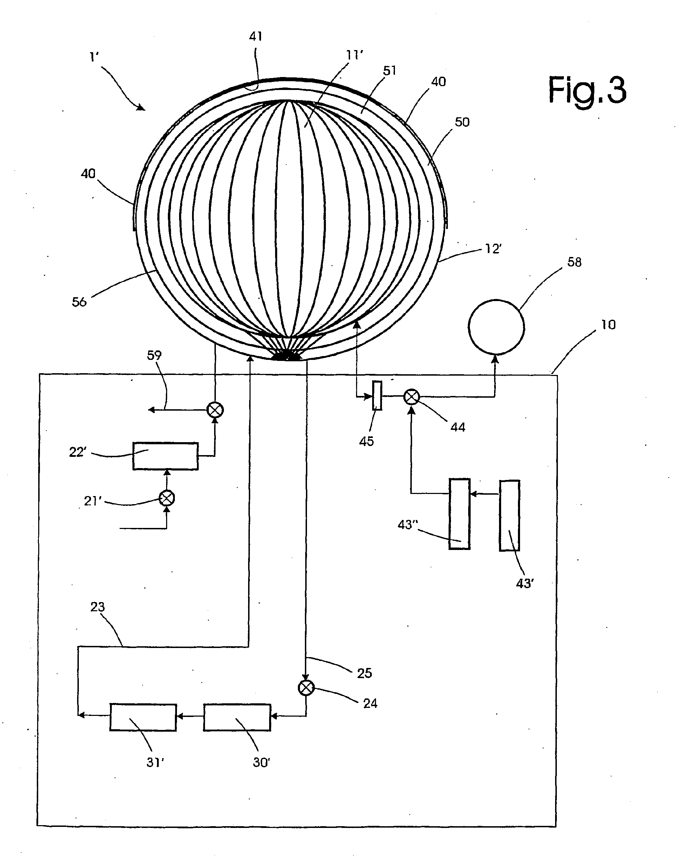

Wie aus Fig. 2A, 2B bzw. Fig. 3 ersichtlich ist, sind all die Gerätschaften, wie die Kühl- 22 und die Heizeinheit 21 etc., in der Plattform 10 enthalten. Selbstverständlich sind noch weitere nicht näher gezeigte Instrumente und Aggregate in dieser Plattform 10 untergebracht, beispielsweise die gesamte Elektronik, Akkumulatoren, Steuergeräte und vieles andere.

Auch bei der in Fig. 3 dargestellten Variante eines unbemannten Luftfahrzeuges 1' ist ein in eine aerodynamische Form aufblasbarer Aussenballon 12' vorhanden, allerdings werden hier um den Hochdruckballon 11 herum zwei Nieder- oder Hochdruck-Isolationskammern 50, 51 gebildet. Der Aussenballon 12' weist einen Aussenmantel 55 und einen Innenmantel 56 auf, zwischen denen die eine, mit dem zirkulierenden Medium gefüllte erste Isolationskammer 50 gebildet ist, welches Medium auch bei dieser Lösung mittels einer Kühleinheit 31' abgekühlt und mittels einer Heizeinheit 31' aufgewärmt werden kann. Zudem ist ein Kompensations-Tank 22' mit einer Pumpe 21', eine Druck- und Temperaturmessung analog wie bei Fig. 2 vorgesehen.

Als Medium wird bei dieser Variante Helium verwendet, dessen spezifisches Gewicht kleiner ist als bei Luft. Geliefert wird das Helium von den in den Hochdruckballon 11 leitenden Speichern 43' und 43 ", von denen der eine Speicher 43' mit flüssigem, indessen der andere mit gasförmigem Helium gefüllt ist. Diese Speicher 43', 43" stehen auch mit einem zusätzlichen, mit Helium gefüllten Ballon 58 in Verbindung, der zum Ausgleichen der Luftfahrzeughöhe vorgesehen ist. Eine Pumpe 44 führt Helium entweder vom Speicher 43" unter Hochdruck in den Ballon 11, oder aber es wird durch diese Pumpe Helium aus dem Ballon 11 in diesen zusätzlichen Ballon 58 abgelassen, um einen konstanten Druck im Ballon 11 zu gewährleisten. Auf diesem Wege kann im Prinzip auch die Höhe des Luftfahrzeuges 1 geändert werden können, indem zusätzliche Luft ein- bzw. Luft ausgelassen wird. Es ist ferner ein Überdruckventil 45 und eine nicht näher dargestellte Druckmessung vorhanden.

Die andere, zwischen dem Innenmantel 56 und dem Hochdruckballon 11 gebildete Nieder- oder Hochdruck-Isolationskammer 51 wird mittels einer Pumpe 21' aus einem Kompensations-Tank 22' mit Aussenluft gefüllt. Die Luft kann via Ablass 59 aus der Isolationskammer 51 abgelassen werden, damit der Druck in dieser Kammer 51 konstant gehalten werden kann. Es kann dementsprechend wiederum der Druck und ausserdem die Höhe über Meer gemessen und an die Steuereinheit übermittelt werden, was nicht näher gezeigt ist.

Analog zur Variante nach Fig. 2 ist der Aussenballon 12' wiederum mit dem Sonnenkollektorfilm 40 und dem Infrarotkollektorfilm 41 versehen, mit denen die Sonnenstrahlung am Tag und Infrarotabstrahlung von der Erde in der Nacht energetisch ausgenutzt werden.

Bei der Ausführungsform nach Fig. 3 wird der Schutz des Hochdruckballons 11 bezüglich der Temperaturschwankungen im Vergleich zur Ausführungsform nach Fig. 2 noch weiter verbessert. Dadurch, dass der Gasdruck im Hochdruckballon 11 des erfindungsgemässen Luftfahrzeuges 1 bzw. 1' weitgehend konstant gehalten werden kann und nicht den negativen Einwirkungen der extremen Tag/Nacht-Temperaturunterschiede ausgesetzt ist, kann das Luftfahrzeug wesentlich länger im Einsatz bleiben und samt Plattform 10 besser seine Position gegenüber der Erde (bzw. gegenüber einem bestimmten Gebiet auf der Erde) aufrechterhalten.

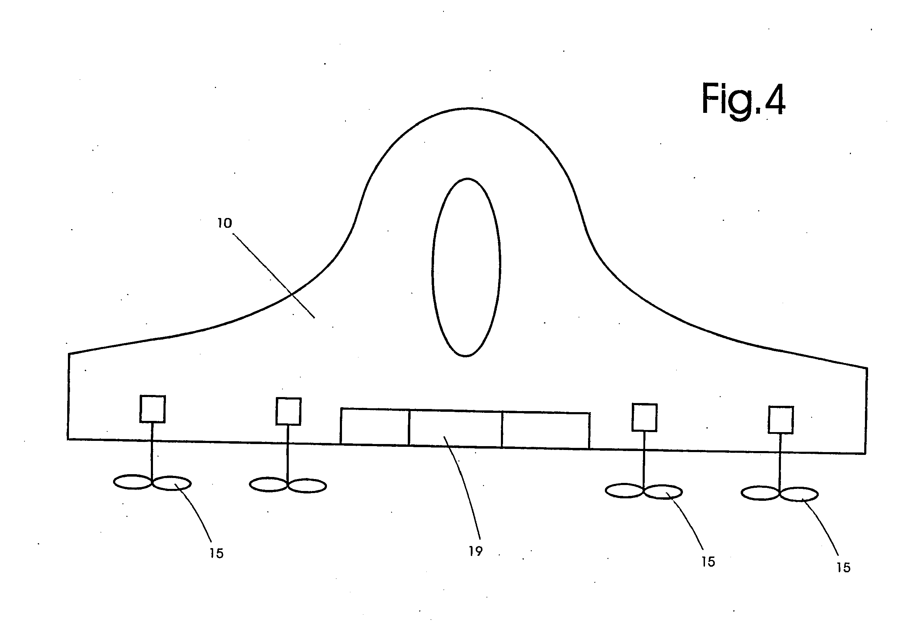

Fig. 4 zeigt eine Draufsicht auf die Plattform 10, die vorliegend eine deltaförmige Ausbildung hat. Dieser Plattform 10 sind mehrere, zum Beispiel vier an ihrer Hinterseite verteilt angeordnete, von einem Elektromotor 15' angetriebene Propeller 15 zugeordnet. Diese Propeller 15 sind - wie bereits oben erwähnt - mit individuellen Drehzahlen ansteuerbar und ausserdem schwenkbar angeordnet, um das Luftfahrzeug 1 in eine bestimmte Position und Richtung zur Erdoberfläche, vorzugsweise in Drehrichtung der Erde, zu bringen und es folglich stets in derselben Position und Richtung zur Erdoberfläche zu halten. Zudem sind auch Leitwerke 19 der Hinterseite der Plattform 10 für eine Höhenverstellung von letzterer zugeordnet.

Die Plattform 10 ist gemäss Fig. 4 vorzugsweise derart aerodynamisch ausgestaltet, dass sie zusammen mit einem zum "Payload plane" der Plattform 10 gehörenden Gleitschirm wie ein selbständiges Luftfahrzeug zurück zur Erde angesteuert werden kann.

Das Luftfahrzeug 1 ist selbstverständlich mit einer kompletten Steuerung ausgerüstet, so dass es sich selbsttätig in der gewünschten Position zur Erdoberfläche befindet. Zudem ist es mit einem Kontrollzentrum auf der Erde verbunden, so dass ein Datenaustausch und Steuerungsmöglichkeiten von der Erde aus durchführbar sind.

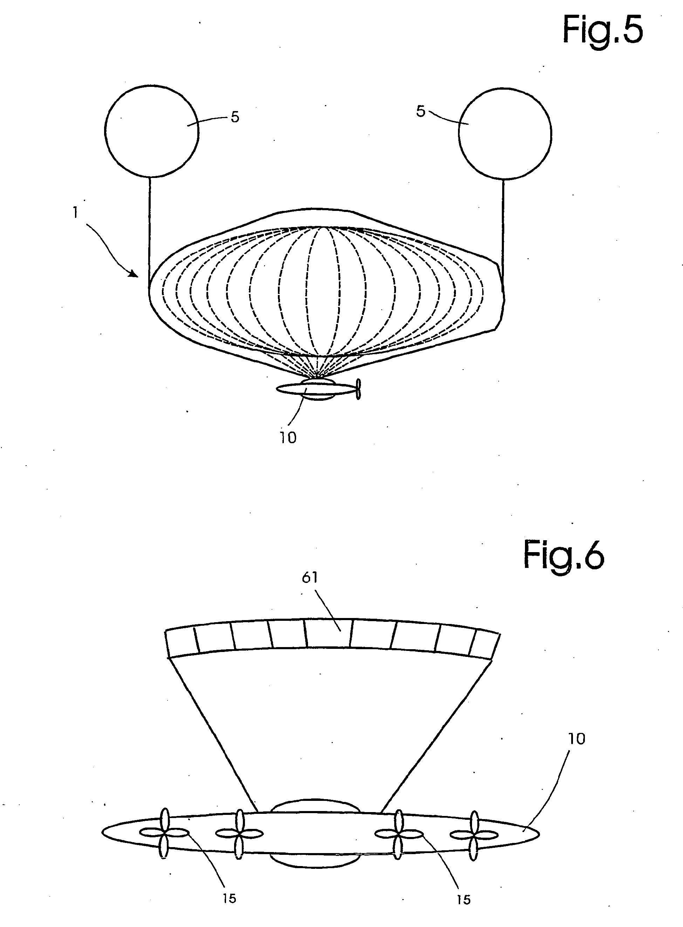

Beim Aufstieg des Luftfahrzeuges 1 von der Erde aus ist es gemäss Fig. 5 vorteilhaft mit zusätzlichen Ballonen 5 bestückt, durch welche dieser Aufstieg schnell erfolgen kann, so dass die Troposphäre in kurzer Zeit durchquert werden kann. Sobald es in die Stratosphäre gelangt, können diese Ballone abgestossen werden. Im Prinzip kann das Luftfahrzeug aber auch ohne zusätzliche Ballone in die gewünschte Höhe gebracht werden.

Die Plattform 10 wird von den Ballonen 11, 12 nach dem Pumpen des Heliumgases oder dem anderen Gas in den Ballon 58 getrennt, indem die Tragelemente 17 von der Plattform 10 gelöst werden, wonach sie sich nach unten absenkt. Auf verschiedenen Höhen werden gegebenenfalls verschiedene Fallschirme geöffnet, wobei in der Höhe von etwa 3 bis 5 km gemäss Fig. 6 ein Gleitschirm 61 geöffnet und die Plattform 10 mit Hilfe der arbeitenden Propeller 15 zum gewünschten Standort auf der Erde zurück gelenkt wird. Durch diese Tragunterstützung dieses Gleitschirmes 61 kann die Plattform 10 mit kleineren Abmessungen versehen werden. Die verbleibenden Ballone 11, 12 werden in der Atmosphäre zerstört.

Anstelle von Helium oder Luft in den Ballons könnten auch andere Gase, wie Sauerstoff, Argon oder ähnlichem und anstelle von Propellern 15 könnten auch Düsentriebwerke oder dergleichen verwendet werden.

## Patentansprüche

1. Unbemanntes Luftfahrzeug als Plattform für telekommunikative oder für andere wissenschaftliche Zwecke, zum Stationieren in einer vorbestimmten Höhe in der Stratosphäre, umfassend einen die Plattform (10) tragenden, mit Gas gefüllten Hochdruckballon (11) sowie Mittel zum Aufrechterhalten der Plattformposition gegenüber der Erde, welche antreibbare Propeller (15) oder dergleichen umfassen, **dadurch gekennzeichnet, dass**
der Hochdruckballon (11) innerhalb mindestens eines in der Stratosphäre eine aerodynamische Aussenform aufweisenden Aussenballons (12; 12') angeordnet ist, der mindestens eine mit einem Medium füllbare Nieder-oder Hochdruck-Isolationskammer (20; 50) um den Hochdruckballon (11) bildet, wobei Heiz- und Kühlmittel für das in der Isolationskammer (20; 50) zirkulierende Medium vorgesehen sind, und die Mittel zum Aufrechterhalten der Plattformposition gegenüber der Erde sich ausserhalb des Aussenballons (12; 12') befinden.

2. Luftfahrzeug nach Anspruch 1, **dadurch gekennzeichnet, dass** die Heiz- und Kühlmittel zum Erwärmen bzw. zum Abkühlen des in die Isolationskammer (20; 50) gepumpten, zirkulierenden Mediums eine Heizeinheit (31; 31') sowie eine Kühleinheit (30; 30') umfassen, die ausserhalb des Aussenballons (12; 12') angeordnet und wahlweise in Einsatz bringbar sind.

3. Luftfahrzeug nach Anspruch 2, **dadurch gekennzeichnet, dass** das in die Isolationskammer (20) gepumpte, zirkulierende Medium Aussenluft ist, die mittels der Heiz- bzw. Kühleinheit (31; 30) in der Nacht erwärmbar und am Tag abkühlbar ist.

4. Luftfahrzeug nach Anspruch 2, **dadurch gekennzeichnet, dass** das in die Isolationskammer (50) gepumpte, zirkulierende Medium Helium ist, das mittels der Heiz- bzw. Kühleinheit (31'; 30') in der Nacht erwärmbar und am Tag abkühlbar ist.

5. Luftfahrzeug nach Anspruch 4, **dadurch gekennzeichnet, dass** zwischen der mit dem Helium füllbaren Nieder- oder Hochdruck-Isolationskammer (50) und dem Hochdruckballon (11) eine weitere, mit Aussenluft füllbare Isolationskammer (51) vorhanden ist.

6. Luftfahrzeug nach einem der Ansprüche 1 bis 5, **dadurch gekennzeichnet, dass** der Aussenballon (12; 12') an seiner Oberfläche mit einem Sonnenkollektorfilm (40) versehen ist, zur energetischen Ausnützung der Sonnenstrahlung am Tag, wobei eine zusätzliche Kunststoffschicht, insbesondere eine Schaumschicht, auf den Sonnenkollektorfilm (40) als Hitzeschild aufgetragen ist.

7. Luftfahrzeug nach Anspruch 6, **dadurch gekennzeichnet, dass** der Sonnenkollektorfilm (40) zur Erzeugung von elektrischer Energie vorgesehen ist, mit der die Heiz- und Kühleinheit (31, 31'; 30, 30') betreibbar und/oder die Propeller (15) antreibbar und/oder andere elektronische Geräte mit Strom versorgt sind, wobei der elektrische Strom in Batterien und/oder Kraftstoffzellen gespeichert wird.

8. Luftfahrzeug nach einem der Ansprüche 1 bis 7, **dadurch gekennzeichnet, dass** der Aussenballon (12; 12') mit einem Infrarotkollektorfilm (41) versehen ist, für energetische Ausnützung der Infrarotabstrahlung von der Erde während der Nacht.

9. Luftfahrzeug nach Anspruch 8, **dadurch gekennzeichnet, dass** der Infrarotkollektorfilm (41) als ein dunkler, etwa 12 µm dicker Aluminiumfilm ausgebildet ist, wobei eine zusätzliche Kunststoffschicht, insbesondere eine Schaumschicht, innenseitig als Hitzeschild aufgetragen ist.

10. Luftfahrzeug nach Anspruch 8 oder 9, **dadurch gekennzeichnet, dass** sowohl der Hochdruckballon (11) als auch der Aussenballon (12; 12') aus einem durchsichtigen Material hergestellt sind, wobei der Infrarotkollektorfilm (41) auf der der Erde zugewandten Innenseite des Aussenballons (12; 12') angebracht ist.

11. Luftfahrzeug nach einem der Ansprüche 1 bis 10, **dadurch gekennzeichnet, dass** die Propeller (15) an der unterhalb des Aussenballons (12; 12') angeordneten Plattform (10) vorzugsweise schwenkbar angebracht sind, wobei die Propeller (15) mit individuellen Drehzahlen versehen sind und damit ermöglichen, dass das Luftfahrzeug (1) in einer horizontalen Ebene gedreht werden kann und somit stets die gewünschte Fahrtrichtung einnimmt.

12. Luftfahrzeug nach Anspruch 11, **dadurch gekennzeichnet, dass** die Plattform (10) eine aerodynamische Aussenform aufweist und mit einem Gleitschirm ausgestattet ist, mit dem zusammen sie nach dem Abtrennen vom Hochdruck- und Aussenballon als ein selbständiges Luftfahrzeug zur Erde zurück lenkbar ist.

13. Luftfahrzeug nach Anspruch 1, **dadurch gekennzeichnet, dass** ein zusätzlicher mit Helium gefüllter Ballon (58) vorgesehen ist, welcher in der Plattform (10) enthalten ist und als Ausgleichskammer für eine Höhenregulierung des gesamten Luftfahrzeuges und zudem für ein einfacheres Landen der Plattform (10) dient.

## Claims

1. Unmanned aircraft as platform for telecommunications or for other scientific purposes, to be stationed at a pre-determined altitude in the stratosphere, comprising a pressurized balloon (11) which is filled with gas and supports the platform (10) and means of maintaining the position of the platform with respect to the earth, which comprise driven propellers (15) or similar, **characterised in that**
the pressurised balloon (11) is arranged within an outer balloon (12; 12'), which is provided with an aerodynamic external shape at least in the stratosphere, which forms around the pressurized balloon (11) at least one low-pressure or high-pressure insulating chamber (20; 50) being optionally filled with a medium, while heating and cooling means are provided for the medium circulating in the insulating chamber (20; 50), and the means for maintaining the position of the platform relative to the earth are located outside the outer balloon (12, 12').

2. Aircraft according to claim 1, **characterised in that** the heating and cooling means for heating respectively cooling the medium pumped into and circulating in the insulating chamber (20; 50) comprise a heating unit (31; 31') and a cooling unit (30; 30'), which are arranged outside the outer balloon (12; 12') and can be brought into operation alternately.

3. Aircraft according to claim 2, **characterised in that** the medium pumped into and circulating in the insulation chamber (20) is outside air, which can be heated during the night and cooled during the day by means of the heating or the cooling unit (31; 30) respectively.

4. Aircraft according to claim 2, **characterised in that** the medium pumped into and circulating in the insulation chamber (50) is helium, which can be heated during the night and cooled during the day by means of the heating or the cooling unit (31; 30) respectively.

5. Aircraft according to claim 4, **characterised in that** there is an additional insulation chamber (51) which can be filled with outside air, between the low or high pressure insulation chamber (50), which can be filled with helium, and the pressurised balloon (11).

6. Aircraft according to one of claims 1 to 5, **characterised in that** the outer balloon (12; 12') is provided on its surface with a solar collector film (40), for energetic exploitation of solar radiation during the day, while an additional plastic layer, in particular a layer of foam, is applied to the solar collector film (40) as heat shield.

7. Aircraft according to claim 6, **characterised in that** the solar collector film (40) is provided in order to generate electrical energy, with which the heating and cooling unit (31, 31'; 30, 30') can be driven and/or the propellers (15) are powered and/or other electronic devices are supplied with power, while the electric current is stored in batteries and/or fuel cells.

8. Aircraft according to one of claims 1 to 7, **characterised in that** the outer balloon (12; 12') is provided with an infrared collector film (41), for energetic exploitation of the infrared re-radiation from the earth during the night.

9. Aircraft according to claim 8, **characterised in that** the infrared collector film (41) is in the form of a dark, approximately 12 µm thick aluminium film, while an additional layer of plastic, in particular a layer of foam, is applied to the inside as a heat shield.

10. Aircraft according to claim 8 or 9, **characterised in that** both the pressurised balloon (11) and the outer balloon (12; 12') are made from a transparent material, while the infrared collector film (41) is applied on the inside of the outer balloon (12; 12') facing towards the earth.

11. Aircraft according to one of claims 1 to 10, **characterised in that** the propellers (15) are preferably attached pivotably on the platform (10) underneath the outer balloon (12; 12'), whereby the propellers (15) being provided with individual speeds, thus enabling the aircraft (1) to be rotated in a horizontal plane and thus adopting the desired direction of flight at all times.

12. Aircraft according to claim 11, **characterised in that** the platform (10) has an aerodynamic external shape and is equipped with a parachute, together with which, after separation from the pressurised and outer balloon, it can be steered back to earth as an independent aircraft.

13. Aircraft according to claim 1, **characterised in that** an additional helium-filled balloon (58) is provided, which is contained in the platform (10) and serves as compensation chamber for altitude regulation of the entire aircraft and also for simpler landing of the platform (10).

## Revendications

1. Aéronef sans équipage en tant que plate-forme utilisée à des fins de télécommunication ou à d'autres fins scientifiques, destiné à être mis en orbite à une altitude prédéterminée dans la stratosphère, comprenant un ballon haute pression (11) rempli de gaz soutenant la plate-forme (10), ainsi que des moyens de maintien de la position de la plate-forme par rapport à la Terre, comprenant des hélices (15) commandables ou analogues, **caractérisé en ce que**
le ballon haute pression (11) est agencé à l'intérieur d'au moins un ballon extérieur (12 ; 12') présentant une forme extérieure aérodynamique dans la stratosphère, qui forme au moins une chambre (20 ; 50) d'isolation haute ou basse pression pouvant être remplie d'un fluide autour du ballon haute pression (11), des agents de chauffage et de refroidissement étant prévus pour le fluide circulant dans la chambre (20 ; 50) d'isolation, et les moyens de maintien de la position de la plate-forme par rapport à la Terre se trouvant à l'extérieur du ballon extérieur (12 ; 12').

2. Aéronef selon la revendication 1, **caractérisé en ce que** les agents de chauffage et de refroidissement comprennent une unité (31 ; 31') de chauffage ainsi qu'une unité (30 ; 30') de refroidissement pour réchauffer respectivement refroidir le fluide en circulation, pompé dans la chambre (20 ; 50) d'isolation, agencées à l'extérieur du ballon extérieur (12 ; 12') et pouvant être mises en oeuvre de manière optionnelle.

3. Aéronef selon la revendication 2, **caractérisé en ce que** le fluide en circulation, pompé dans la chambre (20) d'isolation est de l'air extérieur, qui au moyen de l'unité de chauffage respectivement de l'unité de refroidissement (31 ; 30) peut être chauffé la nuit et refroidi le jour.

4. Aéronef selon la revendication 2, **caractérisé en ce que** le fluide en circulation, pompé dans la chambre (50) d'isolation est de l'hélium, qui au moyen de l'unité de chauffage respectivement de l'unité de refroidissement (31' ; 30') peut être chauffé la nuit et refroidi le jour.

5. Aéronef selon la revendication 4, **caractérisé en ce qu'**une autre chambre (51) d'isolation remplie d'air extérieur est située entre la chambre (50) d'isolation basse ou haute pression remplie d'hélium et le ballon haute pression (11).

6. Aéronef selon l'une quelconque des revendications 1 à 5, **caractérisé en ce que** le ballon extérieur (12 ; 12') est pourvu sur sa surface d'un film (40) capteur solaire, permettant d'exploiter l'énergie du rayonnement solaire le jour, une couche en plastique supplémentaire, en particulier une couche de mousse, étant appliquée sur le film (40) capteur solaire en tant que bouclier thermique.

7. Aéronef selon la revendication 6, **caractérisé en ce que** le film (40) capteur solaire est prévu pour la production d'énergie électrique, permettant le fonctionnement de l'unité (31, 31' ; 30, 30') de chauffage et de refroidissement et/ou l'entraînement des hélices (15), et/ou l'alimentation en courant électrique d'autres appareils électroniques, le courant électrique étant stocké dans des batteries et/ou des piles à combustible.

8. Aéronef selon l'une quelconque des revendications 1 à 7, **caractérisé en ce que** le ballon extérieur (12 ; 12') est pourvu d'un film (41) capteur de rayons infrarouges, pour l'exploitation de l'énergie du rayonnement infrarouge de la Terre pendant la nuit.

9. Aéronef selon la revendication 8, **caractérisé en ce que** le film (41) capteur de rayons infrarouges est conçu sous la forme d'un film en aluminium foncé d'une épaisseur d'environ 12 µm, une couche en plastique supplémentaire, en particulier une couche de mousse, étant appliquée côté intérieur en tant que bouclier thermique.

10. Aéronef selon la revendication 8 ou 9, **caractérisé en ce que** le ballon haute pression (11) et le ballon extérieur (12 ; 12') sont constitués d'un matériau transparent, le film (41) capteur de rayons infrarouges étant appliqué sur le côté intérieur orienté vers la Terre du ballon extérieur (12 ; 12').

11. Aéronef selon l'une quelconque des revendications 1 à 10, **caractérisé en ce que** les hélices (15) sont fixées de préférence de manière pivotante à la plate-forme (10) agencée sous le ballon extérieur (12 ; 12'), les hélices (15) présentant des vitesses de rotation différentes et permettant ainsi à l'aéronef (1) d'être mis en rotation dans un plan horizontal et de prendre la direction souhaitée.

12. Aéronef selon la revendication 11, **caractérisé en ce que** la plate-forme (10) présente une forme extérieure aérodynamique et est équipée d'un parapente, avec lequel, suite à la séparation du ballon haute pression et du ballon extérieur, elle peut être guidée à nouveau vers la Terre en tant qu'aéronef indépendant.

13. Aéronef selon la revendication 1, **caractérisé en ce qu'**un ballon (58) supplémentaire rempli d'hélium agencé dans la plate-forme (10) est utilisé en tant que chambre d'équilibrage pour un réglage d'altitude de l'ensemble de l'aéronef et également un atterrissage plus facile de la plate-forme (10).
